# EUROPEAN PATENT APPLICATION

(11) **EP 2 713 382 A1**
(43) Date of publication of application: **02.04.2014**
(21) Application number: 12853026.8
(22) Date of filing: 30.10.2012
(51) Int. Cl.: H01H 9/18, H01H 13/02, H01H 23/02, H01H 35/00

(54) **SENSOR DEVICE**

(30) Priority: 28.11.2011 JP 2011258647
(71) Applicant: Omron Corporation, Kyoto-shi, Kyoto 600-8530 (JP)
(72) Inventor: MATSUBARA Junichi, Kyoto-shi Kyoto 600-8530 (JP); GONDO Kiyohiko, Kyoto-shi Kyoto 600-8530 (JP); KASUYA Makoto, Kyoto-shi Kyoto 600-8530 (JP); ICHIYANAGI Hoshibumi, Kyoto-shi Kyoto 600-8530 (JP); KOMAI Kazunari, Kyoto-shi Kyoto 600-8530 (JP); MURAKAMI Tsubasa, Kyoto-shi Kyoto 600-8530 (JP)
(74) Representative: Horn Kleimann Waitzhofer
(86) International application number: PCT/JP2012/077963
(87) International publication number: WO 2013/080725

(57) **Abstract**

A sensor device 1 has a case 10 in which a signal processing circuit is incorporated, the case 10 has a display part 100 that displays a numerical value and a character on a casing and has a plurality of switches SW1 to SW5, and each of the switches has a different function. On the top surface of each of the switches SW1 to SW5, a different shape of symbol from each other is provided. Especially, on the switch SW2 that has a function of changing the numerical value indicated in the display part 100 to increase and on the switch SW3 that has a function of changing the numerical value to decrease, a symbol that reminds a function of each of the switches. On the other hand, a symbol that does not remind a function of updating the numerical value is provided to other switches, SW1, SW4, and SW5.

## Description

### TECHNICAL FIELD

The present invention relates to a sensor device (such as a photoelectric sensor, a displacement sensor, and a magnetic sensor) having a function of measuring a physical quantity or a function of detecting an object based on a measurement result, and including a switch used to perform a setting manipulation related to detection and measurement and a display part that displays a setting menu or a setting result.

### BACKGROUND ART

A device including the display part that displays the setting menu or the setting result and the setting switch is well known as a multi-functional sensor device in which a content of an operation can be changed according to a processing purpose or a detection target.

For example, Patent documents 1, 2, and 3 disclose a photoelectric sensor, in which the display part constructed by a 7-segment liquid crystal indicator is provided on a top surface of a narrow main body while plural setting switches are disposed with the display part interposed therebetween.

Specifically, setting switches including an output switching button, a display mode switching button, a swing type vertical adjustment switch, an operation mode selecting slide switch, and a set key switch automatically setting sensitivity and a threshold are provided in the photoelectric sensor disclosed in Patent Document 1. In the vertical adjustment switch, a switch having a function of increasing a numerical value displayed on the display part and a switch having a function of decreasing the numerical value displayed on the display part are integrally formed, and triangular symbols having the same shape are added to button portions corresponding to the switches. One vertex of the triangle is oriented toward a front surface side of a casing in one of switches, one vertex of the triangle is oriented toward a rear surface side of the casing in the other switch, and the functions of the switches are expressed by the difference of the orientation between the triangles (refer to paragraphs 0014 to 0016 in Patent Document 1, and Fig.1).

Patent Document 2 also discloses the switches having functions similar to those of the vertical adjustment switch, the set key switch, the output switching button, and the slide switch in Patent Document 1 as names of an "up/down switch", a "set switch", a "mode switch", and a "channel selector switch". A switch (name of "preset switch") having a function of setting the light receiving amount or threshold on the display to predetermined values is provided in the photoelectric sensor disclosed in Patent Document 2.

In the photoelectric sensor disclosed in Patent Document 3, an "UP key" to which an arrow symbol indicating the front surface side of the casing is added and a "DOWN key" to which an arrow symbol indicating the rear surface side of the casing is added are provided as a key changing the numerical value, and a "MODE key" for mode setting, an operation mode switching slide key, and a slide key switching an output form are also provided.

### PRIOR ART DOCUMENTS

### PATENT DOCUMENT

Patent Document 1: Japanese Unexamined Patent Publication No. 2007-142627
Patent Document 2: Japanese Unexamined Patent Publication No. 2011-29940
Patent Document 3: Japanese Unexamined Patent Publication No. 2004-101446

### SUMMARY OF THE INVENTION

### PROBLEMS TO BE SOLVED BY THE INVENTION

In the photoelectric sensor disclosed in Japanese Unexamined Patent Publication Nos. 2007-142627, 2011-29940, and 2004-101446, the switch (hereinafter referred to as an "up switch") having the function of changing the numerical value displayed on the display part to an increasing direction and the switch (hereinafter referred to as a "down switch") having the function of changing the numerical value to a decreasing direction are expressed by the symbol indicating the front surface side of the casing and the symbol indicating the rear surface side of the casing. However, it is difficult that the functions of the switches are visually distinguished by the symbols. Particularly, the casing of this kind of sensor is placed in various attitudes according to an actual situation of the site, and frequently the front and rear relationship or the right and left relationship differs from an operating manual. Therefore, possibly the up switch and the down switch are manipulated while mistaken for each other.

In the photoelectric sensor disclosed in Patent Document 1, because the shape of a mode selector switch is substantially identical to that of an output selector switch, there is a risk of mistaking the mode selector switch and the output selector switch for each other. In the photoelectric sensor disclosed in Patent Document 2, because the shape of the set switch is substantially identical to that of the mode switch, there is also a risk of mistaking the set switch and the mode switch for each other.

Additionally, misunderstanding is generated in the description for a user, or the description is hardly made.

For example, in a manual to the user, generally a manipulation procedure is described while each manipulation switch is indicated by a name provided by a manufacturer. Therefore, the user confuses the name in the description with the actual switch, and a large amount of effort is required until the user recognizes the description to complete setting work. In the case that the manipulation procedure is orally described by telephone, or in the case that the manipulation procedure is described to a user who speaks a foreign language in another country, it is difficult to correctly transmit information.

The present invention is for solving the above problems, and an object thereof is to easily distinguish the functions of various setting switches and perform the necessary setting manipulation without making a mistake.

### MEANS FOR SOLVING THE PROBLEMS

The present invention applys to a sensor device that has a display part that can display a numerical value and a character provided on a casing in which a signal processing circuit is incorporated, and that has at least three switches including an up switch and a down switch disposed near the display part, the up switch having a function of changing a setting numerical value displayed on the display part to an increasing direction, the down switch having a function of changing the setting numerical value to a decreasing direction. In the sensor device of the present invention, a different kind of function is set to each switch, and a symbol having a different shape is added to a top surface of each switch. A symbol that reminds a user of a function of increasing the numerical value is added to the up switch (for example, a mark "+"), and a symbol that reminds the user of a function of decreasing the numerical value is added to the down switch (for example, a mark "-"). A symbol that does not remind the user of a function of updating the numerical value is provided to other switches.

Any symbol can be set as not only the symbol of the sign or the geometric graphic but also the symbol of the picture or the symbol including the character.

Not only the symbols that can be distinguished from each other by the shape but also the symbols which are different from each other in the color while being identical in the shape, may be added to the switches except the up switch and the down switch.

According to the above configuration, the function of the switch and the symbol are correlated in one-on-one manner, the switch setting the value of the numerical parameter and other switches are clearly distinguished by the symbols. Therefore, the user can easily recognize the switch of the manipulation target by the symbol added to the switch.

In the case that the operating manual is produced, the switch of the manipulation target or the manipulation procedure can easily be transferred such that each switch is indicated by the corresponding symbol. In the case of the oral description, the switch of the manipulation target or the manipulation procedure can easily be transferred such that each switch is expressed by a word meaning the shape.

In one embodiment of the sensor device, a geometric graphic having a different shape is added to the switches except the up switch and the down switch. Therefore, because each switch can be expressed by a generic name of the corresponding graphic, the oral description is further facilitated.

In another embodiment of the sensor device, the switches except the up switch and the down switch include a switch for issuing an instruction to perform tuning processing, sensitivity being adjusted and a setting of a threshold for detection being set through the tuning processing. Further, while the threshold set through the tuning processing or a value of a numerical parameter used in the sensitivity adjustment through the tuning processing is displayed on the display part, the function of changing the displayed numerical value to the increasing direction is set to the up switch, and the function of changing the displayed numerical value to the decreasing direction is set to the down switch.

According to this embodiment, the threshold set through the tuning processing or the current value of the numerical parameter used to adjust the sensitivity is indicated in the display part, and the numerical value is changed by the manipulation of the up switch or the down switch, which allows the threshold or the numerical parameter to be easily updated.

In yet another embodiment of the sensor device, the switches except the up switch and the down switch include a switch for indicating a setting menu to the display part in order to define an operation of the sensor device. Further, while one item in the setting menu is displayed on the display part, a function of sequentially displaying a plurality of items that can be replaced with the currently-displayed item in predetermined order is set to the up switch, and a function of sequentially displaying the plurality of items that can be replaced with the currently-displayed item in opposite order to the display order of the up switch is set to the down switch.

According to this embodiment, in addition to the function of updating the numerical value displayed on the display part, the function of switching the display of the item of the setting menu in order to define the operation of the sensor is set to the up switch and the down switch. The display sequence of the items in the case that the up switch is manipulated is opposite to that in the case that the down switch is manipulated. Therefore, even if the target item is missed because of many manipulation times of one of the switches, the display can be returned to the state in which the target item is displayed by the quick manipulation of the other switch.

### EFFECTS OF THE INVENTION

According to the present invention, because the function of each switch is expressed while correlated with different symbol, the user can easily recognize the switch of the manipulation target to perform the correct manipulation even if the sensor device is disposed in any attitude. In the case that the manipulation procedure is described by an operating manual or in an oral manner, the description is facilitated because each switch can be expressed by the shape respectively.

### BRIEF DESCRIPTION OF THE DRAWINGS

FIG. 1 is a perspective view illustrating an appearance of an optical fiber type photoelectric sensor;
FIG. 2 is a perspective view illustrating a state in which a top cover of the photoelectric sensor in FIG. 1 is opened;
FIG. 3 is a view illustrating a top surface including a manipulation part and a display part of the photoelectric sensor when the top surface is viewed from a front side;
FIGS. 4 are views illustrating an example in which a numerical parameter is changed by manipulating an up switch and a down switch;
FIGS. 5 are views illustrating an example in which a content of an operation is changed by manipulating the up switch; and
FIG. 6 is a view illustrating a description example of a manipulation procedure.

### MODE FOR CARRYING OUT THE INVENTION

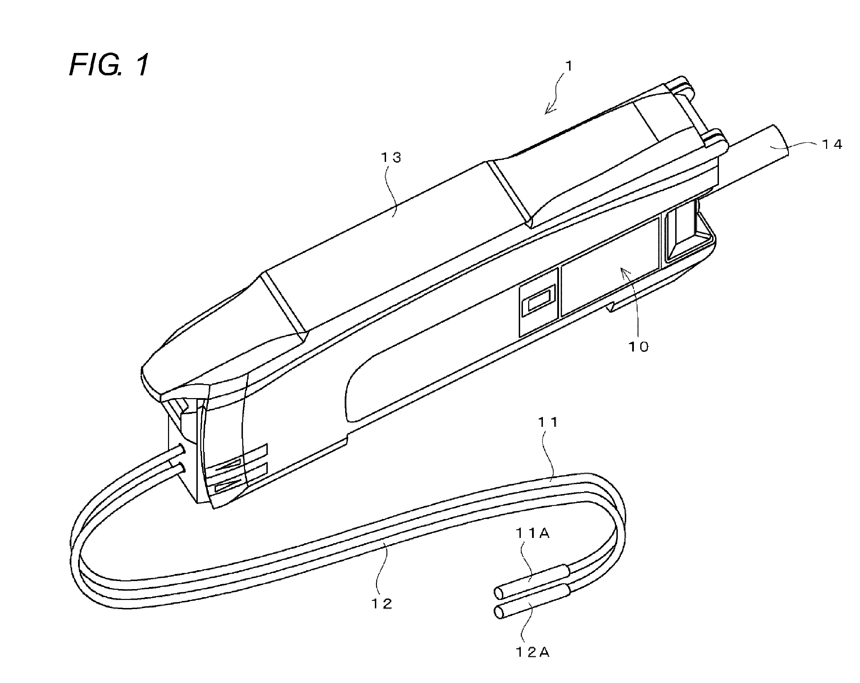

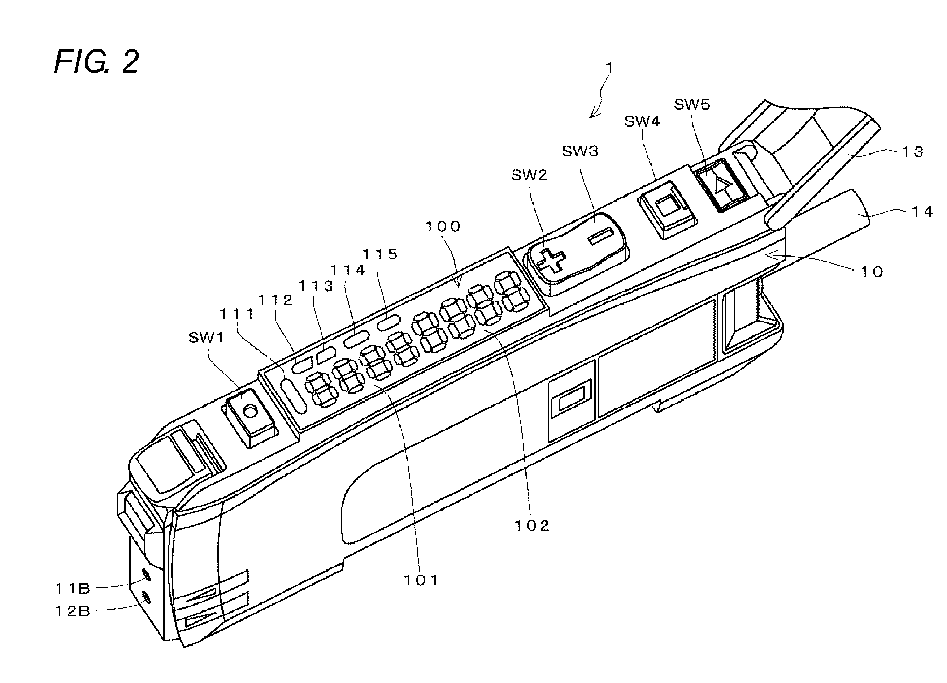

FIGS. 1 and 2 illustrate an appearance of an optical fiber type photoelectric sensor to which the present invention is applied.

A photoelectric sensor 1 includes a main body 10 and a pair of optical fibers 11 and 12 attached to a front surface of the main body 10. The optical fiber 11 is used to project light, and the optical fiber 12 is used to receive light. Head parts 11A and 12A including lenses and the like are attached to front end portions of the optical fibers 11 and 12, respectively. The actual optical fibers 11 and 12 can be lengthened compared with the state in the figure.

The optical fibers 11 and 12 are inserted in insertion ports 11 B and 12B in the front surface of the main body 10, respectively. A light projection part is provided near the insertion port 11 B of the light projection optical fiber 11, and a light-receiving part is provided near the insertion port 12B of the light-receiving optical fiber 12. A board on which a processing circuit including a CPU and a memory is mounted is incorporated in the main body 10, and a connection cable 14 is drawn from a rear surface of the main body 10.

The photoelectric sensor 1 acts as a transmission type photoelectric sensor, in which the light-receiving part receives the light projected from the light projection part and the state in which an optical path is obstructed is determined to be "existence of object". Alternatively, the photoelectric sensor 1 may act as a reflection type photoelectric sensor that receives the light reflected from the object and determines the "existence of object". In the case that the photoelectric sensor is used as the reflection type photoelectric sensor, common head parts are attached to the leading ends of the optical fibers 11 and 12, and the head parts are placed toward a detection area.

Light-receiving amount data generated by the light-receiving part is input to a controller (CPU), whether the light is input is determined by comparing the light-receiving amount data to a previously-registered threshold, and a determination result is output.

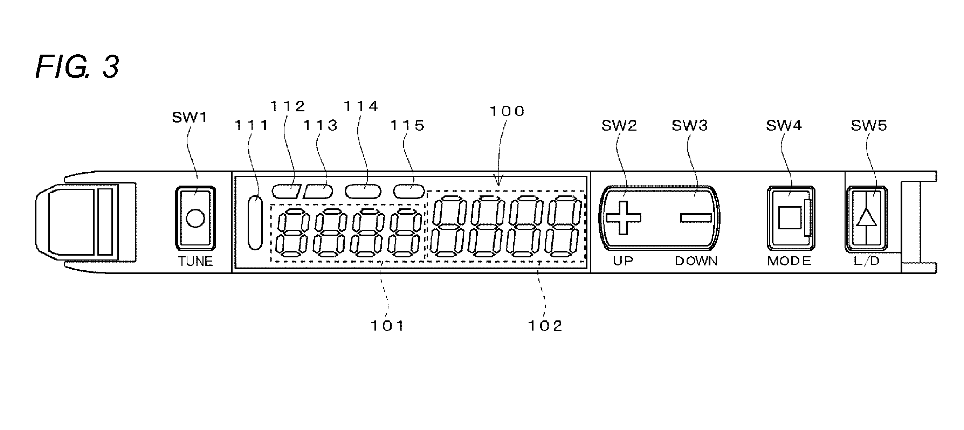

A display part 100 and a plurality of push-button switches SW1 to SW5 are provided on the top surface of the main body 10. The top surface is covered with a cover 13 during use. During setting, the cover 13 is opened to be able to manipulate the push-button switches SW1 to SW5. FIG. 2 is a perspective view illustrating the main body 10 in which the cover 13 is opened, and FIG. 3 is a view illustrating the top surface when the top surface is viewed from a front side. Because of the transparent cover 13, the display of the display part 100 can be checked through the cover 13 even if the cover 13 is attached.

A configuration of the top surface will be described with reference to FIGS. 2 and 3.

In the embodiment, the push-button switch SW1 is disposed in a position close to the front surface of the main body 10, the display part 100 is provided at the back of the push-button switch SW1, and the four push-button switches SW2, SW3, SW4, and SW5 are disposed at the back of the display part 100. Although button portions of the push-button switches SW2 and SW3 are integrally formed, switch bodies (not illustrated) in the main body 10 are independently provided.

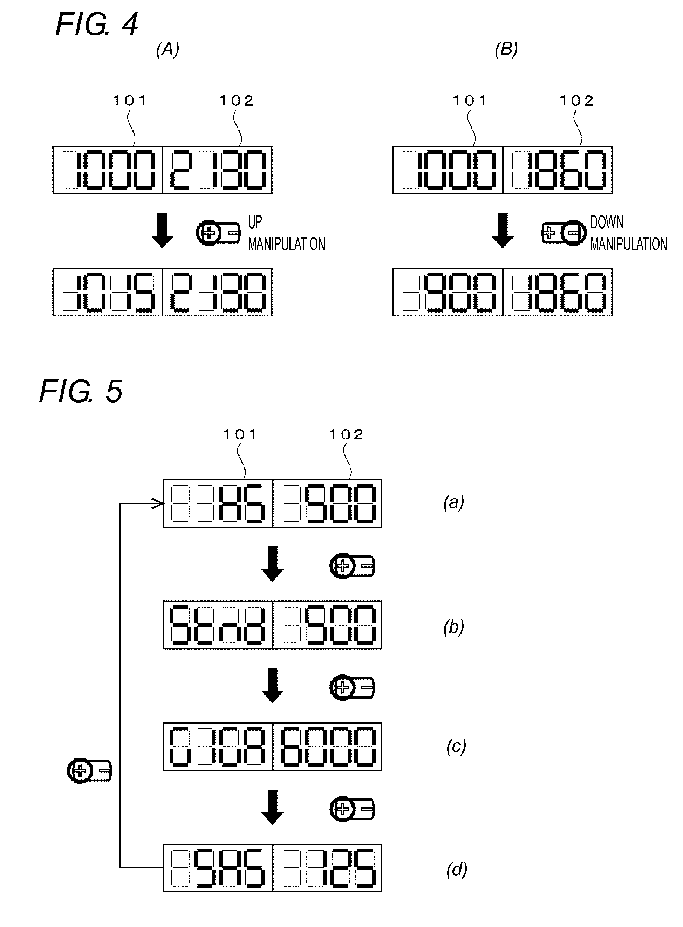

A pair of indicators 101 and 102 and indicating lamps 111 to 115 are provided in the display part 100. Each of the indicators 101 and 102 is constructed by four 7-segment LEDs, and displays numbers of four digits or less and an alphabetical character string. Smaller characters are indicated in the indicator 101 than characters in the indicator 102. However, in the example of Fig.4 and Fig.5, indications in the indicators 101 and 102 are indicated with the same size as a simplistic diagram for explanation. When receiving the manipulation of each of the push-button switches SW1 to SW5, the controller performs processing corresponding to the manipulation content, and changes display of the display part 100.

The front push-button switch SW1 is used in processing of automatically setting a threshold for sensitivity adjustment and detection. Because the processing is generally called "tuning", hereinafter the switch SW1 is referred to as a "tuning switch SW1".

The pair of push-button switches SW2 and SW3 at the back of the display part 100 is used to change numerical values or setting menus, which are displayed on the indicators 101 and 102. Because a function of changing the displayed numerical value to a increasing direction is provided to the push-button switch SW2, hereinafter the switch SW2 is referred to as an "up switch SW2". Because a function of changing the displayed numerical value to a decreasing direction is provided to the push-button switch SW3, hereinafter the switch SW3 is referred to as a "down switch SW3".

The push-button switch SW4 is used to set various modes of measurement processing and detection processing. Hereinafter the switch SW4 is referred to as a "mode switch SW4".

The push-button switch SW5 is used to switch an output form of the photoelectric sensor 1. Specifically, one of a "light-on mode" in which the output is put into an on state when the light-receiving amount is greater than or equal to the threshold and a "dark-on mode" in which the output is put into the on state when the light-receiving amount is less than or equal to the threshold is selected. Hereinafter the switch SW5 is referred to as an "output selector switch SW5".

The indicating lamp 111 is lit when a detection signal from the photoelectric sensor 1 becomes the on state in detection processing. The indicating lamp 112 is lit when the light-on mode is selected, and the indicating lamp 113 is lit when the dark-on mode is selected.

The indicating lamp 114 is lit when processing of automatically adjusting the light receiving amount on the display is enabled. The indicating lamp 115 is lit during and after the tuning processing.

As illustrated in FIG. 3, character strings ("TUNE", "UP", "DOWN", "MODE", and "L/D") expressing functions of the switches SW1 to SW5 are provided near lower end edges of the switches SW1 to SW5. Further, symbols having different shapes are added to button portions of the switches SW1 to SW5. The character strings and the symbols can be formed by shapes of dies in molding the button portions. Alternatively, the character strings and the symbols may be formed by techniques, such as embossing, pattern printing, and stamping processing.

Symbols "+" and "-", which remind a user of the functions of the up and down switches SW2 and SW3, are added to the button portions of the up and down switches SW2 and SW3.

Symbols of a circle (○), a quadrangle (□), and a triangle (Δ) are added to the button portions of the tuning switch SW1, the mode switch SW4, and the output selector switch SW5.

In the tuning processing of the embodiment, when a user performs work including the manipulation of the tuning switch SW1 according to the predetermined procedure, the sensitivity is adjusted such that the light receiving amount becomes a target value suitable for the detection, and then the threshold is automatically set. The set threshold is displayed on the display part 100, and the threshold can be updated in response to the manipulations of the up and down switches SW2 and SW3 in the display state.

FIGS. 4(A) and 4(B) illustrate transition examples of the display, which is generated in the display part 100 in the case that the threshold set through the tuning processing is changed in response to the user's manipulation. The display is performed as standard display not only during the measurement but also immediately after the tuning processing is ended.

The numerical value displayed on the indicator 101 is the threshold, and the numerical value displayed on the indicator 102 is the light receiving amount. In FIGS. 4(A) and 4(B), an upper stage is the pre-change display, and a lower stage is the post-change display.

In the display state, when the button portion of the up switch SW2 to which a mark "+" is added is pressed, the numerical value of the indicator 101 is updated to a value in which one is added to a current value. When the button portion of the down switch SW3 to which a mark "-" is added is pressed, the numerical value of the indicator 101 is updated to a value in which one is subtracted from a current value. In any of the switches SW2 and SW3, when the pressed state is continued for at least a predetermined time, the numerical value of the indicator 101 is continuously updated at a higher speed.

When the user who visually compares the threshold displayed on the indicator 101 and the light receiving amount displayed on the indicator 102 determines that the threshold is increased, the user manipulates the up switch SW2 to change the threshold to the larger value as illustrated in FIG. 4(A). On the other hand, when determining that the threshold is decreased, the user manipulates the down switch SW3 to change the threshold to the smaller value as illustrated in FIG. 4(B).

The numerical parameter that is a changing target of the up and down switches SW2 and SW3 is not limited to the threshold. For example, as to a target value of the light receiving amount used in the sensitivity adjustment processing, a default value can also be changed to a higher or lower value in response to the manipulations of the switches SW2 and SW3. In the case that a variation of the light receiving amount is measured for a predetermined time, a time length that is the measurement target can be changed by manipulating the switches SW2 and SW3.

The photoelectric sensor 1 of the embodiment is designed to set the mode in each of plural setting items provided in each function. Specifically, when the mode switch SW4 is continuously pressed for at least a predetermined time in the measurement state, a name of the mode that is currently set as a sub-item related to one of the setting items is displayed on the display part 100. When the mode switch SW4 is pressed for a short time, the display is updated to the state in which the content of another setting item is expressed. Similarly, the current setting content of each setting item is sequentially called and displayed on the display part 100 by repeatedly manipulating the mode switch SW4.

When the up switch SW2 or the down switch SW3 is manipulated while the setting content of any setting item is displayed, the mode set with respect to the currently-displayed setting item can be switched to another mode.

FIG. 5 illustrates a transition example of the display in the case that the mode (hereinafter referred to as a "detection mode") related to detection capability of the sensor is switched by the manipulations of the switches SW2 and SW3.

In the display example, an abbreviated name of the name of the current detection mode is displayed on the indicator 101, and the light receiving amount is displayed on the indicator 102. A symbol "HS" in (a) is an abbreviated name of a "high speed" that means high-speed detection processing, and a symbol "Stnd" in (b) is an abbreviated name of a "standard" that means detection processing at a standard speed. A symbol "GIGA" is an abbreviated name of a detection mode "giga" in which both a processing time and a detection distance are long, and a symbol "SHS" is an abbreviated name of a detection mode "super high speed" in which both the processing time and the detection distance are short.

In response to the manipulation of the mode switch SW4, the detection mode currently set with respect to the detection capability is displayed. When the up switch SW2 or the down switch SW3 is manipulated, the controller switches the display of the indicator 101 while switching the detection mode in response to the manipulation. Further, the sensitivity is adjusted according to the changed detection mode, and the light receiving amount obtained by the adjustmented sensitivity is displayed on the indicator 102.

In the display example in FIG. 5, it is considered that the "HS" mode shown in (a) is the current setting state, and that the display is sequentially switched in the order of (a) → (b) → (c) → (d) → (a) every time the up switch SW2 is manipulated. In the case that the down switch SW3 is manipulated, the display is sequentially switched in the reverse order, that is, in the order of (a) → (d) → (c) → (b) → (a). When the mode switch SW4 is manipulated to move the display to another setting item or when the mode switch SW4 is continuously pressed to return to the measurement mode, the mode displayed immediately before the manipulation is fixed, and then the photoelectric sensor 1 is operated in the fixed mode.

For other setting items, similarly the names of the plural modes prepared as sub-menus can sequentially be displayed in response to the manipulation of the up switch SW2 or the down switch SW3. Further, a switching sequence of the display by the manipulation of the up switch SW2 is a reverse switching sequence of the display by the manipulation of the down switch SW3.

Because the symbols "+" and "-", which remind the user of those functions, are provided to the up switch SW2 and the down switch SW3, each of the switches SW2 and SW3 can be distinguished together with the functions even if the main body 10 is disposed in any attitude. Because the geometric graphics that do not remind the user of the numerical value updating function are added to the tuning switch SW1, the mode switch SW4, and the output selector switch SW5, there is no risk of mistaking the switches SW1, SW4, and SW5 for the up and down switches SW2 and SW3. Therefore, the user can easily distinguish the switch necessary to change the numerical value of the indicator 101 to the desired direction, and perform the changing manipulation.

As described above, the specific functions are allocated to the switches SW1 to SW5 of this embodiment. In addition, there are some special settings that are performed by a manipulation of a combination of at least two switches. Conventionally, it is difficult to describe the setting procedure related to the special setting. On the other hand, because the symbols having different shapes are allocated to the switches SW1 to SW5 in this embodiment, the switches each of SW1 to SW5 can be expressed based on not the name but the symbol respectively.

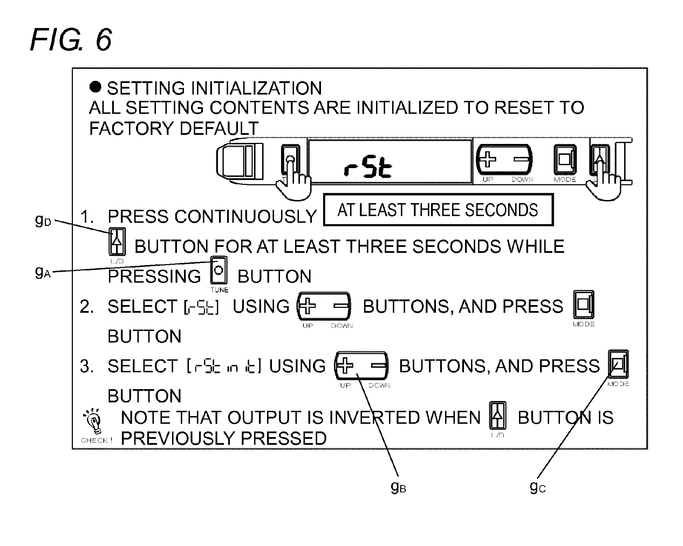

FIG. 6 selectively illustrates a point, at which the manipulation procedure to return the setting to the initial state, as an example of the description in an operating manual related to the special setting manipulation.

In the description, the tuning switch SW1 is expressed by a picture gA, the up switch SW2 and the down switch SW3 are expressed by a picture gB, the mode switch SW4 is expressed by a picture gC, and the output selector switch SW5 is expressed by a picture gD. The pictures gA, gB, gC, and gD represent the configurations of the button portions of the actual switches SW1 to SW5, so that the user can easily recognize which switches is adapted to the each of the pictures based on the symbols of the pictures gA, gB, gC, and gD in the description, and progress the manipulation along the described procedure.

In the embodiment, the switches SW1, SW4, and SW5 to which the geometric graphics are allocated can be expressed based on the symbols provided to the switches, such as a "circular-mark switch", a "quadrangular-mark switch", and a " triangular-mark switch". Similarly, the switches SW2 and SW3 can be expressed based on the symbols provided to the switches, such as a "positive switch" and a "negative switch". Therefore, even in the case the manipulation procedure is orally described, the necessary information can correctly be transmitted to the user without misunderstanding.

Further, the symbol of the easy understanding concept is provided to each of the switches SW1 to SW5 irrespective of a language, so that the functions and manipulation procedures of the switches SW1 to SW5 can be described for a person in any country by the manual or the oral description of the configuration in FIG. 6.

However, the symbols allocated to the switches SW1 to SW5 is not limited to the above embodiment. For example, a symbol of a character "U" meaning "UP" may be provided to the up switch SW2, and a symbol of a character "D" meaning "DOWN" may be provided to the down switch SW3. The symbols of the geometric graphics or signs, which are different from those of the above embodiment, may be allocated to the switches SW1, SW4, and SW5, or the symbols of the characters that do not remind the user of the numerical value update may be allocated to the switches SW1, SW4, and SW5.

The symbols, which are identical in the shape while being different in the color, are allocated to the switches SW1, SW4, and SW5, and the switches SW1, SW4, and SW5 may be expressed by the colors of the allocated symbols.

In the above embodiment, the switches SW1 to SW5 are the push-button switches. Alternatively, not limited to this, a touch panel including the display part 100 is disposed on the top surface of the main body 10, and the switches SW1 to SW5 may be set by an image.

### DESCRIPTION OF SYMBOLS

- 1: Photoelectric sensor
- 10: Main body
- 100: Display part
- 101, 102: Indicator
- SW1: Tuning switch
- SW2: Up switch
- SW3: Down switch
- SW4: Mode switch
- SW5: Output selector switch

## Claims

1. A sensor device comprising:
a display part that displays a numerical value and a character on a casing, the casing having a signal processing circuit; and
at least three switches including an up switch and a down switch, the up switch having a function of changing the numerical value to increase, the down switch having a function of changing the numerical value to decrease, wherein
each switch having a different function, each switch having a different symbol,
the up switch has a symbol to remind a user of the function to increase the numerical value, the down switch has a symbol to remind a user of the function to decrease the numerical value, and other switches has a symbol not to remind a user to update the numerical value.

2. The sensor device according to claim 1, wherein each switch except the up switch and the down switch has a different geometric graphic.

3. The sensor device according to claims 1 or 2, wherein the switches except the up switch and the down switch include a switch to instruct a tuning processing that is to set a threshold for detecting and to set a parameter for adjusting a sensitivity,
the function of changing the numerical value to increase is set to the up switch and the function of changing the numerical value to decrease is to set to the down switch when a threshold or a parameter is displayed on the display part, the threshold being set by the tuning process, and the parameter being used for adjusting a sensitivity.

4. The sensor device according to claims 1 or 2, wherein the switches except the up switch and the down switch include a switch that instructs to display a setting menu on the display part, the setting menu defining an operation of the sensor device,
when the display part displays an item of the menu, a function to display a plurality of items sequentially is set to the up switch and a currently-displayed item is replaceable by the items, and a function to display a plurality of items sequentially in opposite order of the up switch is set to the down switch and a currently- displayed item is replaceable by the items..
